# EUROPÄISCHE PATENTSCHRIFT

(11) **EP 3 707 024 B1**
(45) Veröffentlichungstag und Bekanntmachung des Hinweises auf die Patenterteilung: **06.10.2021**
(21) Anmeldenummer: 18804256.8
(22) Anmeldetag: 09.11.2018
(51) Int. Cl.: B60K 17/346, B60K 17/34, B60K 17/36

(54) **MODULARER ANTRIEBSSTRANG SOWIE EIN FAHRZEUG MIT EINEM SOLCHEN ANTRIEBSSTRANG**
MODULAR DRIVE TRAIN AND A VEHICLE COMPRISING SUCH A DRIVE TRAIN
GROUPE MOTOPROPULSEUR MODULAIRE ET VÉHICULE ÉQUIPÉ D'UN TEL GROUPE MOTOPROPULSEUR

(30) Priorität: 10.11.2017 DE 102017126480
(43) Veröffentlichungstag der Anmeldung: 16.09.2020
(73) Patentinhaber: SYN TRAC GmbH, 4822 Bad Goisern a.H. (AT)
(72) Erfinder: PUTZ, Stefan, 4822 Bad Goisern (AT)
(74) Vertreter: HGF
(86) Internationale Anmeldenummer: PCT/EP2018/080824
(87) Internationale Veröffentlichungsnummer: WO 2019/092211

(56) Entgegenhaltungen:
- WO-A1-2016/205480
- DE-A1-102012 021 513
- GB-A- 1 298 871
- JP-A- 2010 120 455
- US-A1- 2007 272 453

## Beschreibung

Die vorliegende Erfindung betrifft einen modularem Antriebsstrang sowie ein Fahrzeug mit einem solchen Antriebsstrang.

Unter dem Antriebsstrang eines Fahrzeuges werden in der Kraftfahrzeugtechnik alle Komponenten verstanden, die im Fahrzeug die Leistung für den Antrieb generieren und bis auf die Straße übertragen. Beim konventionellen Antriebsstrang, bei dem ein Verbrennungsmotor (Otto- oder Dieselmotor) eingesetzt wird, zählen dazu der Motor mit dem Schwungrad (ggf. als Zweimassenschwungrad), die Kupplung mit dem Fahrzeuggetriebe, bei mehrspurigen Fahrzeugen das Differential, die Antriebswellen oder Steckachsen sowie die Räder. Bei einem mehrspurigen heck- oder allradgetriebenen Fahrzeug kommen noch zusätzliche Gelenkwellen oder Kardanwellen, die Viscokupplung, das eventuelle Untersetzungsgetriebe, das Kreuzgelenk oder die Gelenkscheibe, das Mittellager und ggf. Mittendifferential(e) hinzu.

Aus der US 2007/0272453 A1 ist eine Triebwerks- und Antriebsstranganordnung für ein Fahrzeug bekannt, wobei die Anordnung mit mindestens zwei Radeinheiten und einer auf den Radeinheiten gelagerten Karosserie, im allgemeinen bestehend aus einem auf der Karosserie gelagerten Motor; einem auf dieser Karosserie gelagerten Getriebe, das an der Unterseite des Motors angeordnet ist; einem ersten Getriebegehäuse zum Übertragen des Antriebs von einer Ausgangswelle des Motors auf eine Eingangswelle des Getriebes; einem zweiten Getriebegehäuse zum Übertragen des Antriebs von einer Ausgangswelle des Getriebes auf nach vorne und nach hinten ragende Ausgangswellen; einen ersten Radträger, der auf dem Körper vor dem zweiten Getriebegehäuse gelagert ist, mit einer Eingangswelle, die antriebsmäßig mit der nach vorne ragenden Ausgangswelle des zweiten Getriebegehäuses gekoppelt ist, und einem Paar seitlich ragender Halbwellen, die betriebsmäßig mit den Rädern der ersten Radeinheiten verbunden sind; und einen zweiten Radträger, der auf dem Körper hinter dem zweiten Getriebegehäuse gelagert ist, mit einer Eingangswelle, die antriebsmäßig mit der nach hinten ragenden Ausgangswelle des zweiten Getriebegehäuses gekoppelt ist, und einem Paar seitlich ragender Halbwellen, die betriebsmäßig mit den Rädern der zweiten Radeinheit verbunden sind.

Aufgabe der vorliegenden Erfindung ist es, ein Fahrzeug mit einem modularen Antriebsstrang zu schaffen.

Diese Aufgabe wird mit Merkmalen des unabhängigen Anspruchs 1 gelöst.

Vorteilhafte Weiterbildungen davon sind in den Unteransprüchen angegeben.

Ein erfindungsgemäßes Fahrzeug umfasst ein Getriebe, ein Längsdifferential, ein Zentralrohrmodul, zumindest eine Achse mit einem Achsdifferential, wobei die Achse an das Zentralmodul angebaut ist und das Längsdifferential die aus dem Getriebe zur Verfügung gestellten Antriebsmoment auf die zumindest eine Achse überträgt, und ein in den Antriebsstrang zwischen Längsdifferential und Achse integriertes Zwischenachsdifferential.

Unter einem Zentralrohrmodul wird im Rahmen der vorliegenden Erfindung ein Bauteil zum Verbinden einer Achse mit einem Antriebsstrang eines Getriebes verstanden, wobei vorzugsweise eine Achse an das Zentralrohrmodul angebaut ist.

Das Längsdifferential kann vorzugsweise in das Getriebe integriert sein.

Das Zentralrohrmodul weist vorzugsweise ein integriertes sperrbares Querdifferential auf.

An das Getriebe ist eine weitere Achse mittels eines Zentralrohres angebaut. Dabei handelt es sich um weitere Hinter- bzw. weitere Vorderachsen, die gelenkt oder nicht gelenkt ausgebildet sind. Das Längsdifferential kann in das Getriebe integriert sein und somit das Antriebsmoment eines entsprechenden Fahrzeugmotors auf die weiteren Achsen verteilen.

Eine weitere Achse bzw. weitere Achsen mit Achsdifferential können fest über Zentralrohrmodule an die erste Achse angebaut oder lösbar über eine Kopplungsvorrichtung mit der Achse verbunden werden, wobei die Achsen dann zwei Vorder- oder zwei Hinterachsen eines Fahrzeugs ausbilden.

Das Zentralrohrmodul kann ein erstes Zentralrohrmodul sein, und am Getriebe auf einer in Längsrichtung dem ersten Zentralrohrmodul gegenüberliegenden Seite kann ein weiteres zweites Zentralrohrmodul angeordnet sein. Dieses kann vorzugsweise ebenfalls mit einem integriertem sperrbaren Querdifferential ausgestattet sein.

Weiterhin kann eine zweite Achse mit Achsdifferential vorgesehen sein, wobei diese zweite Achse an das zweite Zentralrohrmodul angebaut ist und das Längsdifferential die aus dem Getriebe zur Verfügung gestellten Antriebsmomente auf die Achsen überträgt.

Erfindungsgemäß kann eine weitere Achse mit Achsdifferential fest über ein weiteres Zentralrohrmodul an die zweite Achse angebaut oder lösbar über eine Antriebswelle aus dem Zwischenachsdifferential, die durch das Achsdifferential geführt ist und eine Kopplungseinrichtung mit der zweiten Achse verbunden sein, wobei die Achsen dann zwei Vorder- oder zwei Hinterachsen eines Fahrzeugs ausbilden.

In den Antriebsstrang ist zwischen Längsdifferential und Achse mit vorgebautem Achsdifferential ein Zwischenachsdifferential integriert.

Das Längsdifferential kann die aus dem Getriebe zur Verfügung gestellten Antriebsmomente zwischen Vorder- und Hinterachse(n) verteilen.

Vorder- und/oder Hinterachsen können lenkbar ausgebildet sein.

Die Erfindung wird im Folgenden anhand der Figuren näher erläutert. Diese zeigen in:
- Figur 1:: eine schematische Darstellung eines nicht erfindungsgemäßen 4x4-Fahrzeuges mit Motor, Getriebe, Vorderachse und Hinterachse und entsprechenden Achsdifferentialen,
- Figur 2:: eine schematische Darstellung eines nicht erfindungsgemäßen 4x4-Basisfahrzeuges mit einem zusätzlichen Zwischenachsdifferential,
- Figur 3:: das Fahrzeug aus Figur 2 mit angekoppelter Zusatzachse, so dass ein 6x6-Fahrzeug mit permanentem Allradantrieb ausgebildet wird,
- Figur 4:: eine schematische Darstellung eines 6x6-Basisfahrzeuges mit einem weiteren Zwischenachsdifferential,
- Figur 5:: das 6x6-Fahrzeug aus Figur 4 mit angekoppelter Zusatzachse, so dass ein 8x8-Fahrzeug mit permanentem Allradantrieb ausgebildet wird,
- Figur 6:: eine schematische Darstellung eines 6x6-Fahrzeuges mit zwei Hinterachsen,
- Figur 7:: eine schematische Darstellung eines 8x8-Fahrzeuges,
- Figur 8:: eine schematische Darstellung eines 4x4-Basisfahrzeuges mit angekoppelter Zusatzachse und angekoppeltem Zusatzmotor,
- Figur 9:: eine schematische Darstellung des Fahrzeuges aus Figur 8 mit abgekoppeltem Zusatzmotor, und
- Figur 10:: Schaltschema für die Momentenübertragung mit angekoppeltem Zusatzmotor.

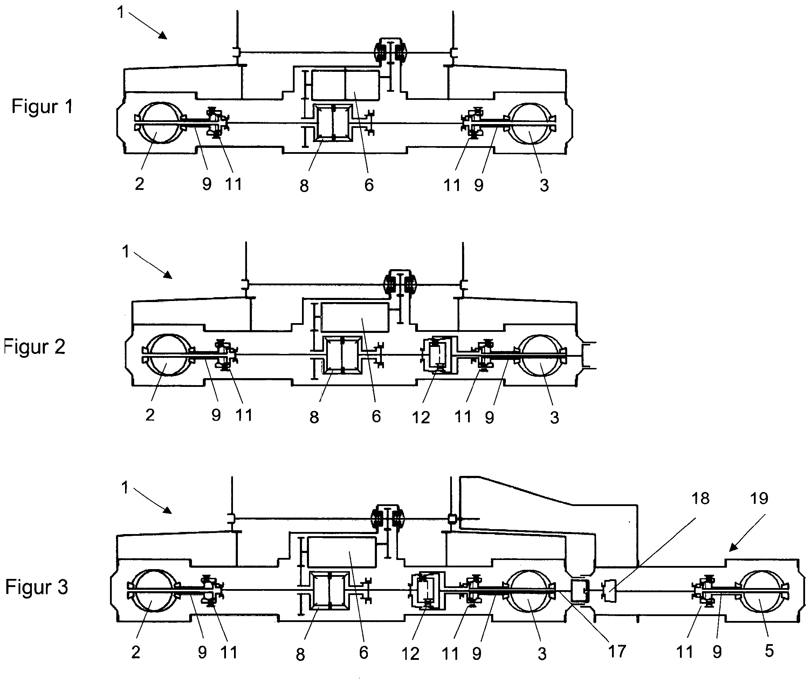

Im Folgenden wird das Grundkonzept eines Antriebsstranges eines Fahrzeuges 1 beschrieben (Figur 1).

Um einen Antriebsstrang 15 eines erfindungsgemäßen Fahrzeuges 1 individuell erweiterbar ausbilden zu können, ist erfindungsgemäß ein Fahrzeugbaukasten in Form von verschiedenen Differentialmodulen (Differentiale integriert in Zentralrohre zu Vorder- und Hinterachse) vorgesehen, die entsprechend der Konfiguration des Fahrzeugs bzw. Basisfahrzeugs angeordnet werden können. Diese werden im Rahmen der vorliegenden Erfindung als Zentralrohrmodule 9 bezeichnet.

Dabei dienen das Getriebegehäuse eines Getriebes 6, die Zentralrohrmodule 9 und Achsmittelstücke als tragende Elemente.

Der Radstand des Fahrzeuges beträgt bspw. ca. 3300 mm, wobei das Getriebe 6 bzw. Flansche zu den Zentralrohrmodulen 9 zur Vorder- und zur Hinterachse symmetrisch zur Fahrzeugmitte in Längsrichtung ausgeführt sind. Der Abstand dieser Flansche beträgt bspw. ca. 1224 mm. Die Zentralrohre 9 zur Vorder- und zur Hinterachse 2, 3 werden hinsichtlich ihrer Einbaulänge austauschgleich ausgeführt. Die Zentralrohre bzw. die Zentralrohrmodule 9 weisen eine Länge von bspw. ca. 750 mm auf.

Im Folgenden wird der schematische Aufbau eines Antriebsstranges 15 für ein oder mehrere teilweise erfindungsgemäße Fahrzeuge 1 bzw. für ein Fahrzeugsystem beschrieben (Figuren 1 bis 9).

Das Fahrzeug 1 weist als zentrales Element in etwa in der Fahrzeugmitte und seitlich neben einer Fahrzeuglängsachse das Getriebe 6 mit einem integrierten Längsdifferential 8 auf.

Das Längsdifferential 8 verteilt die aus dem Getriebe 6 zur Verfügung gestellten Antriebsmomente zwischen einer Fahrzeugfront und einem Fahrzeugheck. Das Längsdifferential 8 ist mit einer Differentialsperre 10 ausgerüstet (Figur 1).

An das Getriebe 6 ist sowohl im Fahrzeugfront- sowie im Fahrzeugheckanbau ein gleiches Zentralrohrmodul 9 mit integriertem sperrbaren Querdifferential 11 als Achsdifferential 11 verbaut. Wiederum an die Zentralrohre 9 sind die vordere Längsachse 2 bzw. hinten wahlweise eine gelenkte oder nicht-gelenkte Achse 3 angebaut.

Grundsätzlich ist beim Fahrzeug 1 in der Basisversion als 4x4-Fahrzeug in dem Antriebsstrang 15 ein Längsdifferential 8, ein Zwischenachsdifferential 12 und ein Achsdifferential 11 sowie zumindest eine fest verbaute Achse 2,3 aufeinanderfolgend angeordnet.

Das Fahrzeug 1 aus Figur 1 weist ein Zwischenachsdifferential 12 auf (Figur 2). An ein solches 4x4-Fahrzeug ist eine Zusatzachse ankoppelbar. Durch Verbindung der angekoppelten zweiten Hinterachse 5 mit dem Antriebsstrang 15 des Fahrzeuges wird daraus ein 6x6 Fahrzeug mit permanentem Allradantrieb (Figur 3).

Um die genannte Zusatzachse 5 anzukoppeln, wird die koppelbare Achse 5 über eine Kupplungsvorrichtung 14 mit dem Zwischenachsdifferential 12 gekoppelt, welches vor der ersten, fest verbauten Achse 2, 3 angeordnet ist. Hierzu wird die weitere koppelbare Achse 5 über eine durch das Achsdifferential 11 der ersten fest verbauten Achse 2, 3 geführte Antriebswelle 17 über eine Kopplungsvorrichtung 14 gekoppelt und damit antreibbar. Die Kopplungsvorrichtung 14 ist beispielsweise eine an sich bekannte Klauenkupplung mit der die Antriebswelle 17 und die Welle der koppelbaren Achse 5 miteinander drehbar verbunden werden.

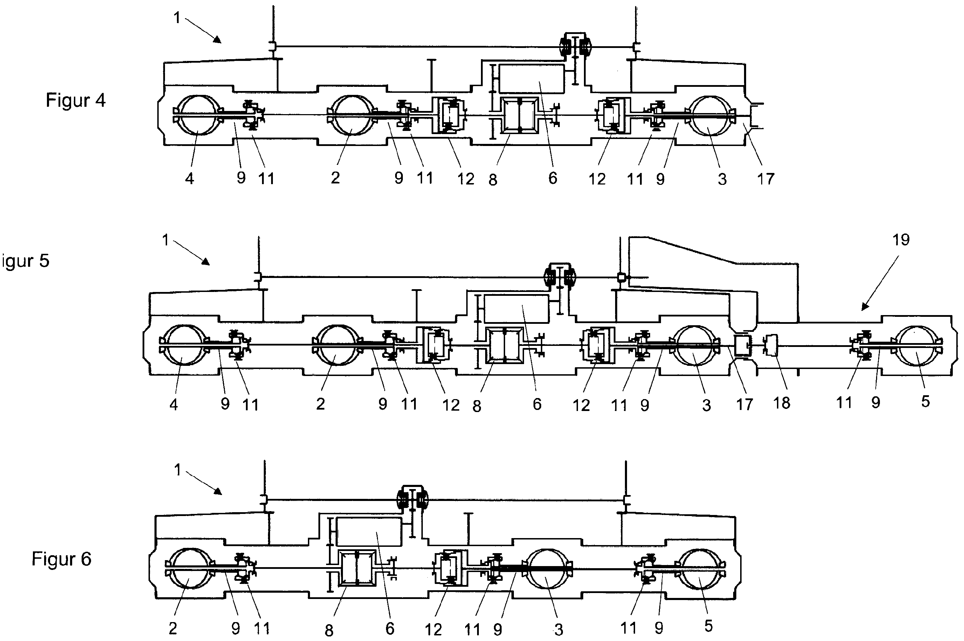

Ein Antriebsstrang 15 für ein Fahrzeug 1 mit zwei Vorderachsen 2, 4 stellt sich erfindungsgemäß wie folgt dar (Figur 4).

Beim 6x6-Antrieb mit zwei Vorderachsen 2, 4 wird ein erstes vorderes Zentralrohrmodul 9 zusätzlich mit Zwischenachsdifferential 12 ausgeführt. Das vom Längsdifferential 8 zur Verfügung gestellte Antriebsmoment wird durch das Zwischenachsdifferential 12 an die Achsdifferentiale der ersten und zweiten Vorderachse 2, 4 geleitet. Der Antrieb der Hinterachse verläuft analog zum 4x4-Antriebsstrang.

An ein solches 4x4-Fahrzeug 1 ist eine Zusatzachse 5 ankoppelbar. Durch Verbindung der angekoppelten zweiten Hinterachse 5 mit dem Antriebsstrang 15 des Fahrzeuges 1 wird daraus ein 8x8 Fahrzeug mit permanentem Allradantrieb (Figur 5).

Ein Antriebsstrang 15 für eine Auslegung als 6x6-Fahrzeug mit zwei Hinterachsen 3, 5 für ein Fahrzeug 1 stellt sich wie folgt dar (Figur 6).

Beim 6x6-Antrieb mit zwei Hinterachsen 3, 5 wird das vordere erste Zentralrohrmodul 9 zusätzlich mit Zwischenachsdifferential ausgeführt. Das vom Längsdifferential zur Verfügung gestellte Antriebsmoment wird durch das Zwischenachsdifferential 12 an die Achsdifferentiale der ersten und zweiten Hinterachse 3, 5 geleitet. Der Antrieb der Vorderachse 2 verläuft analog zum 6x6-Antriebsstrang mit zwei Vorderachsen 2, 4.

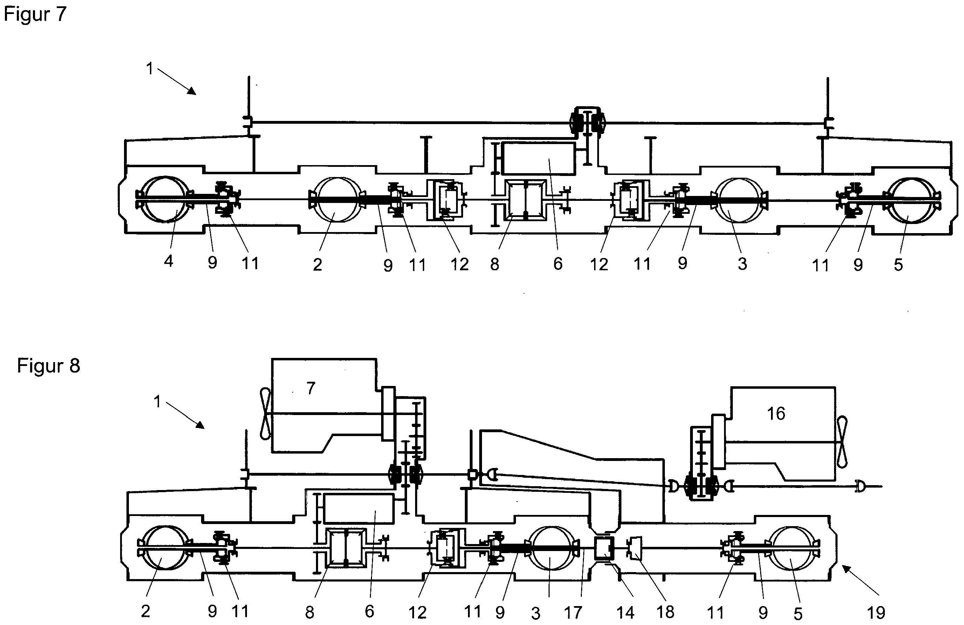

Ein Antriebsstrang eines 8x8-Fahrzeuges mit zwei Vorderachsen 2, 4 und zwei Hinterachsen 3, 5 für ein Fahrzeug stellt sich wie folgt dar (Figur 7).

Beim 8x8-Antriebsstrang ist der vordere Antriebsstrang entsprechend dem Antriebsstrang 6x6 mit zwei Vorderachsen 2, 4 aufgebaut und der hintere Antriebsstrang entsprechend einem Antriebsstrang 6x6 mit zwei Hinterachsen 3, 5 ausgeführt.

Ein Antriebsstrang 15 für wahlweise 4x4- oder 6x6-Fahrzeug, der mit zwei weiteren Hinterachsen 3, 5 ausgeführt ist, stellt sich wie folgt dar (Figuren 6 und 7).

Dabei ist der Antriebsstrang 15 4x4 bzw. 6x6 (2 Hinterachsen) kuppelbar. Zwischen Getriebe 6 und vorderer Lenkachse wird ein Querdifferentialmodul verbaut. Zwischen Getriebe und lenkbarer Hinterachse HA1 wird ein Quer- und Zwischenachsenmodul vorgesehen. An der ersten Hinterachse wird in eine Dockingaufnahme (Kopplungseinrichtung zum Verbinden) eine Seite einer Klauenkopplung integriert.

Das kuppelbare Achsmodul 19 weist einen Dockingeinschub (Kopplungseinrichtung zum Verbinden) auf, in welchem die zweite Seite der Klauenkupplung für die Kupplungsvorrichtung 14 integriert ist, ein Zentralrohrmodul mit Trennkupplung 18 und sperrbarem Querdifferential 11 als Achsdifferential 11 und einer angetriebenen Achse.

Wird das Fahrzeug ohne gekuppelte Zusatzachse betrieben, muss das Zwischenachsdifferential gesperrt sein. Dadurch kann das Fahrzeug als 4x4 mit permanentem Allradantrieb und sperrbaren Differentialen betrieben werden.

Durch Ankuppeln der zusätzlichen Achse 4, 5 in dem zusätzlichen Achsmodul 19 werden die beiden Teile einer eine Antriebswelle verbindenden Klauenkupplung 14 mittels einer Kopplungs- bzw. einer Dockingvorrichtung miteinander verbunden und eine Drehmomentübertragung zur gekoppelten Achse 4, 5 ermöglicht. Um ein Drehen des Dockingeinschub-seitigen Klauenelements während des Dockingvorganges zu verhindern, ist zwischen Klauenkupplung 14 und Querdifferential 11 eine Trennkupplung 18 vorgesehen. Nach dem Dockingvorgang wird die Trennkupplung 18 geschlossen und die Zwischenachsdifferentialsperre geöffnet.

Das Fahrzeug kann nun wie ein Fahrzeug mit permanentem 6x6-Antrieb mit sperrbaren Differentialen betrieben werden.

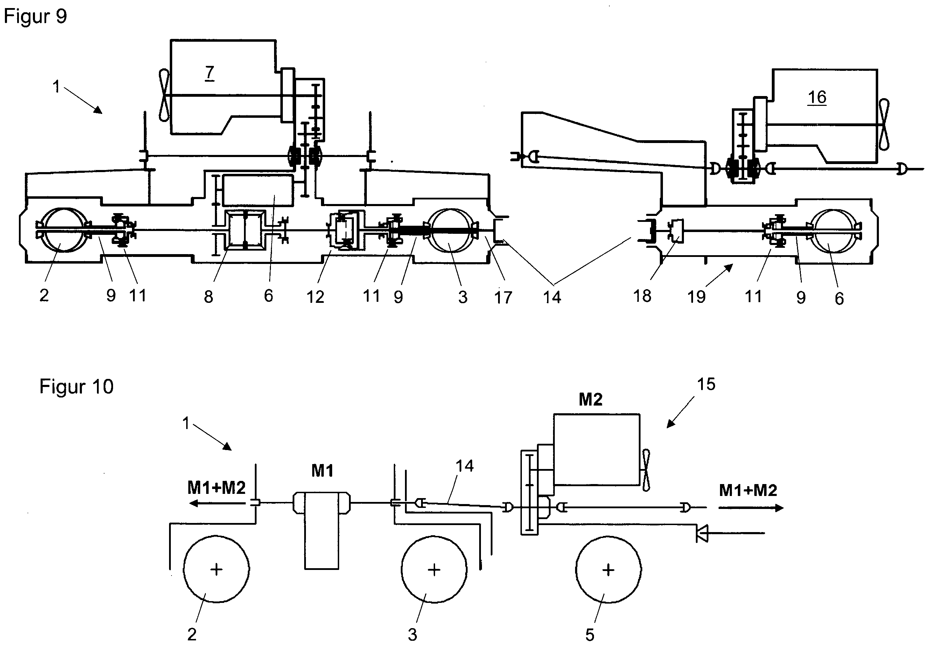

Der Antriebsstrang lässt sich auch derart erweitern, dass ein Zusatzmotor über eine entsprechende Kopplungsvorrichtung mit dem Antriebsstrang des Fahrzeuges verbunden wird (Figuren 8 und 9). Ein entsprechendes Schaltschema für die Momente ist in Figur 10 dargestellt. Durch die besondere koaxiale Anordnung von Front- und Heckzapfwellenkupplung ist es beim erfindungsgemäßen Antriebsstrang bzw. beim erfindungsgemäßen Fahrzeug oder bei erfindungsgemäß ausgebildeten Fahrzeugen möglich, zwischen Front- und Heckzapfwelle am Fahrzeug zusätzlich Leistung zu übertragen und durch das Getriebegehäuse hindurchzuleiten, ohne diese über die Zahnräder übertragen zu müssen.

Mittels einer Kopplungseinrichtung bzw. einer Dockingeinrichtung kann an einer Fahrzeugfront oder an ein Fahrzeugheck ein Zusatzmotor angekoppelt werden. Die Leistung von Fahrzeug und Zusatzmotor wird summiert und variabel auf Fahrantrieb, Anbaugerät und Nebenantriebe verteilt.

Zapfwellenbetriebene Anbaugeräte können wahlweise an der gegenüberliegenden Dockingaufnahme oder an einer Dockingaufnahme am Zusatzmotormodul angekoppelt werden.

Es ist somit möglich, die gesamte Systemleistung von Fahrzeug und Zusatzmotor über die Zapfwelle an das Anbaugerät abzugeben oder variabel an Anbaugerät, Fahrantrieb und Nebenantrieb zu verteilen.

Dadurch, dass ein erfindungsgemäßes Fahrzeug in Fahrtrichtung vorne und entgegen der Fahrtrichtung mit einer Kopplungseinrichtung bzw. einer Dockingaufnahme versehen ist, ist es möglich, zusätzlich angetriebene Achsen, die über entsprechende Dockingeinschübe verfügen, vollautomatisch anzukuppeln.

Fahrzeuge, die für den Betrieb von ankuppelbaren Achsen ausgerüstet sind, verfügen über ein Zwischenachsdifferential vor der zweiten Achse. Ein solches Zwischenachsdifferential verteilt das Antriebsmoment zwischen zweiter Achse und einer fahrzeugseitigen Kupplungsklaue, welche zur Drehmomentübertragung an die dritte Achse kuppelbare Achse dient. Wird ein solches Fahrzeug ohne dritte Achse betrieben, ist das Zwischenachsdifferential mittels einer Differentialsperre gesperrt und wird als Fahrzeug mit permanentem 4x4-Antrieb betrieben.

Ein ankuppelbares Anbaugerät bzw. Achsmodul verfügt über eine entsprechende Kupplungsklaue, eine Trennkupplung sowie ein Querdifferential.

Bei einem Verfahren zum Docking bzw. beim Ankuppelvorgang der dritten Achse ist die Trennkupplung geöffnet, um beim Heranziehen des Achsmoduls sicherzustellen, dass die achsmodulseitige Kupplungsklaue stillsteht.

Nach abgeschlossenem Kupplungsvorgang wird die Trennkupplung im Achsmodul geschlossen und die Differentialsperre im fahrzeugseitigen Zwischenachsdifferential geöffnet.

Der Antriebsstrang des Fahrzeugs stellt somit einen permanenten 6x6-Antrieb mit sperrbarem Längsdifferential, Zwischenachsdifferential und sperrbaren Querdifferentialen an allen drei Achsen dar.

### Bezugszeichenliste

- 1: Fahrzeug
- 2: Vorderachse
- 3: Hinterachse
- 4: zweite Vorderachse
- 5: zweite Hinterachse
- 6: Getriebe
- 7: Motor
- 8: Längsdifferential
- 9: Zentralrohrmodul
- 10: Differentialsperre
- 11: sperrbares Querdifferential/Achsdifferential
- 12: Zwischenachsdifferential
- 13: Zusatzmotor
- 14: Kopplungsvorrichtung
- 15: Antriebsstrang
- 16: Zusatzmotor
- 17: Antriebswelle
- 18: Trennkupplung
- 19: koppelbares Achsmodul

## Patentansprüche

1. Fahrzeug umfassend
- ein Getriebe (6)
- ein Längsdifferential (8),
- ein Zentralrohrmodul (9) zum Verbinden einer fest verbauten Achse (2, 3) mit einem Antriebsstrang (15) des Getriebes (6), wobei die fest verbaute Achse (2, 3) an das Zentralrohrmodul (9) angebaut ist und das Längsdifferential (8) die aus dem Getriebe (6) zur Verfügung gestellten Antriebsmomente über eine Antriebswelle im Zentralrohrmodul (9) auf die fest verbaute Achse (2, 3) überträgt, und wobei in dem Antriebsstrang (15) das Längsdifferential (8) und ein Achsdifferential (11) sowie die fest verbaute Achse (2, 3) aufeinander folgend angeordnet sind, **dadurch gekennzeichnet, dass** zumindest eine weitere, kuppelbare Achse (4, 5) mit einem Zwischenachsdifferential (12), welches vor der fest verbauten Achse (2, 3) angeordnet ist, über eine durch das Achsdifferential (11) der fest verbauten Achse (2, 3) geführte Antriebswelle (17) über eine Kopplungsvorrichtung (14) antreibbar ist, wobei an das Getriebe (6) sowohl in einem Fahrzeugfront- sowie im Fahrzeugheckanbau ein gleiches Zentralrohrmodul (9) mit integriertem sperrbaren Querdifferential (11) als dem Achsdifferential (11) verbaut ist, wobei an die Zentralrohrmodule (9) eine vordere, fest verbaute Achse (2) bzw. eine hintere, fest verbaute Achse (3) angebaut sind.

2. Fahrzeug nach Anspruch 1, **dadurch gekennzeichnet, dass** ein Getriebegehäuse des Getriebes (6), die Zentralrohrmodule (9) und Mittelstücke der fest verbauten Achsen (2,3) als tragende Elemente ausgebildet sind.

3. Fahrzeug gemäß Anspruch 1 oder 2,
**dadurch gekennzeichnet,**
**dass** in das Getriebe (6) das Längsdifferential (8) zum Verteilen eines Antriebsmoments auf weitere Achsen (2, 3, 4, 5) integriert ist.

4. Fahrzeug gemäß einem der Ansprüche 1 bis 3,
**dadurch gekennzeichnet,**
**dass** das Längsdifferential (8) eine Differentialsperre (10) aufweist.

5. Fahrzeug gemäß einem der Ansprüche 1 bis 4,
**dadurch gekennzeichnet,**
**dass** in das Zentralrohrmodul (9) ein sperrbares Querdifferential (11) als Achsdifferential (11) integriert ist.

6. Fahrzeug gemäß einem der Ansprüche 1 bis 5,
**dadurch gekennzeichnet,**
**dass** zwischen der Achse (2, 3, 4, 5) und dem Längsdifferential (8) ein Zwischenachsdifferential (12) in einen Antriebsstrang (15) integriert ist, zum Verteilen des Antriebsmoments auf weitere koppelbare Achsen, wobei das Zwischenachsdifferential sperrbar ist, um bei im nicht mit einer Achse gekoppelten Zustand das Antriebsmoment ausschließlich auf eine fest verbaute Achse zu übertragen.

7. Fahrzeug gemäß einem der Ansprüche 1 bis 6,
**dadurch gekennzeichnet,**
**dass** zumindest eine weitere Achse (2, 3, 4, 5) mit Achsdifferential fest über ein Zentralrohrmodul (9) an die erste Achse (2, 3, 4, 5) angebaut oder lösbar über eine Kopplungsvorrichtung mit der ersten Achse (2, 3, 4, 5) verbunden ist, wobei die Achsen (2, 3, 4, 5) dann zwei Vorder- oder zwei, drei oder mehr Hinterachsen (2, 3, 4, 5) eines Fahrzeuges (1) ausbilden.

8. Fahrzeug gemäß einem der Ansprüche 1 bis 7,
**dadurch gekennzeichnet,**
**dass** das Zentralrohrmodul (9) ein erstes Zentralrohrmodul (9) ist und am Getriebe (6) auf einer in Längsrichtung dem ersten Zentralrohrmodul gegenüberliegenden Seite ein zweites Zentralrohrmodul (9) angeordnet ist, vorzugsweise mit integriertem sperrbaren Querdifferential (11), wobei eine zweite Achse (2, 3, 4, 5) mit einem Achsdifferential vorgesehen ist, wobei diese zweite Achse (2, 3, 4, 5) an das zweite Zentralrohrmodul (9) angebaut ist und das Längsdifferential (8) die aus dem Getriebe (6) zur Verfügung gestellten Antriebsmomente auf die Achsen (2, 3, 4, 5) überträgt

9. Fahrzeug gemäß einem der Ansprüche 1 bis 8,
**dadurch gekennzeichnet,**
**dass** eine weitere Achse (2, 3, 4, 5) mit Achsdifferential fest über ein Zentralrohrmodul (9) an die zweite Achse angebaut oder lösbar über eine Kopplungsvorrichtung mit der zweiten Achse verbunden ist, wobei die Achsen (2, 3, 4, 5) dann zwei Vorder- oder zwei Hinterachsen (2, 3, 4, 5) eines Fahrzeuges (1) ausbilden.

10. Fahrzeug gemäß einem der Ansprüche 1 bis 9,
**dadurch gekennzeichnet,**
**dass** Vorder- und/oder Hinterachse/n (2, 3, 4, 5) angetrieben und/oder lenkbar ausgebildet sind.

11. Fahrzeug nach einem der vorhergehenden Ansprüche,
**dadurch gekennzeichnet,**
**dass** das Fahrzeug über eine erste Dockingvorrichtung verfügt, welche als Aufnahme für eine korrespondierend ausgebildete Dockingvorrichtung eines Achsmoduls (19) oder eines Anbaugerätes ausgebildet ist.

12. Fahrzeug nach einem der vorhergehenden Ansprüche,
**dadurch gekennzeichnet,**
**dass** ein kuppelbares Achsmodul (19) eine Dockingeinrichtung oder einen Dockingeinschub zur korrespondierenden Verbindung mit der Dockingvorrichtung des Fahrzeuges (1) umfasst, wobei in dem kuppelbaren Achsmodul die zweite Seite einer Klauenkupplung für die Kupplungseinrichtung (14) integriert ist, sowie ein Zentralrohrmodul mit Trennkupplung (18) und sperrbarem Querdifferential (11) als Achsdifferential (11) und eine, der zumindest einen weiteren kuppelbaren Achse (4, 5).

13. Fahrzeug nach einem der vorhergehenden Ansprüche,
**dadurch gekennzeichnet,**
**dass** in angekuppeltem Zustand einer, der zumindest einen weiteren kuppelbaren Achse (4, 5) in einem Achsmodul (19) die beiden Teile einer eine Antriebswelle verbindenden Klauenkupplung (14) mittels einer Kopplungsvorrichtung miteinander verbunden sind, so dass eine Drehmomentübertragung zur gekoppelten Achse (4, 5) ermöglicht ist, wobei zum Zwecke der Verhinderung des Drehens eines Klauenelements einer weiteren kuppelbaren Achse (4,5) während des Verbindungsvorganges, zwischen der Klauenkupplung (14) und dem sperrbaren Querdifferential (11) als Achsdifferential (11) eine Trennkupplung (18) vorgesehen ist, wobei nach dem Verbinden die Trennkupplung (18) geschlossen und die Zwischenachsdifferentialsperre geöffnet wird.

## Claims

1. Vehicle comprising
- a transmission (6)
- a longitudinal differential (8),
- a central tube module (9) for connecting a permanently installed axle (2, 3) with a drive train (15) of the transmission (6), wherein the permanently installed axle (2, 3) is attached to the central tube module (9) and the longitudinal differential (8) transmits the drive torque provided by the transmission (6) via a drive shaft in the central tube module (9) to the permanently installed axle (2, 3), and wherein the longitudinal differential (8) and an axle differential (11) and the permanently installed axle (2, 3) are arranged consecutively in the drive train (15), **characterised in that** at least one further detachable axle (4, 5) with an intermediate axle differential (12), which is arranged in front of the permanently installed axle (2, 3), can be driven by a drive shaft (17) via a coupling device (14) routed through the axle differential (11) of the permanently installed axle (2, 3), wherein an identical central tube module (9) with an integrated lockable transverse differential (11) is installed as the axle differential (11) on the transmission (6) both in a vehicle front attachment as well as in the vehicle rear attachment, wherein a front permanently installed axle (2) or, respectively, a rear permanently installed axle (3) is attached to the central tube module (9).

2. Vehicle according to claim 1, **characterised in that** a transmission housing of the transmission (6), the central tube module (9) and central sections of the permanently installed axles (2,3) are designed as load-bearing elements.

3. Vehicle according to claims 1 or 2,
**characterised in that**,
incorporated in the transmission (6) is the longitudinal differential (8) for distributing a torque to further axles (2, 3, 4, 5).

4. Vehicle according to any one of claims 1 to 3,
**characterised in that**
the longitudinal differential (8) has a differential lock (10).

5. Vehicle according to any one of claims 1 to 4,
**characterised in that**
incorporated in the central tube module (9) is a lockable transverse differential (11) as an axle differential (11).

6. Vehicle according to any one of claims 1 to 5,
**characterised in that**
between the axles (2, 3, 4, 5) and the longitudinal differential (8), an intermediate axle differential (12) is incorporated in a drive train (15) to distribute the drive torque to further coupled axles, wherein the intermediate axle differential can be locked in order to transmit the torque, when in a state not coupled to an axle, exclusively to a permanently installed axle.

7. Vehicle according to any one of claims 1 to 6,
**characterised in that**
at least one further axle (2, 3, 4, 5) with the axle differential is fixedly attached via a central tube module (9) to the first axle (2, 3, 4, 5) or releasably connected via a coupling device with the first axle (2, 3, 4, 5), wherein the axles (2, 3, 4, 5) then form two front or two, three or more rear axles (2, 3, 4, 5) of a vehicle (1).

8. Vehicle according to any one of claims 1 to 7,
**characterised in that**
the central tube module (9) is a first central tube module (9) and a second central tube module (9) is arranged on the transmission (6) on a side opposite the first central tube module in the longitudinal direction , preferably with an incorporated lockable transverse differential (11), wherein a second axle (2, 3, 4, 5) is provided with an axle differential wherein this second axle (2, 3, 4, 5) is attached to the second central tube module (9) and the longitudinal differential (8) transfers the torque provided from the transmission (6) to the axles (2, 3, 4, 5).

9. Vehicle according to any one of claims 1 to 8,
**characterised in that**
a further axle (2, 3, 4, 5) with an axle differential is fixedly attached via a central tube module (9) to the second axle or is connected releasably to the second axle via a coupling device wherein the axles (2, 3, 4, 5) then form two front or two rear axles (2, 3, 4, 5) of a vehicle (1).

10. Vehicle according to any one of claims 1 to 9,
**characterised in that**
front and/or rear axle(s) (2, 3, 4, 5) is/are driven and/or are designed to be steerable.

11. Vehicle according to any one of the previous claims,
**characterised in that**
the vehicle has a first docking device which is designed as a receptacle for a correspondingly designed docking device of an axle module (19) or of an add-on unit.

12. Vehicle according to any one of the previous claims,
**characterised in that**
a detachable axle module (19) comprises a docking device or a docking slot for a corresponding connection with the docking device on the vehicle (1) wherein the second side of a dog clutch for the coupling device (14) is incorporated in the detachable axle module, as well as a central tube module with a separating clutch (18) and a lockable transverse differential (11) as an axle differential (11) and a, at least one, further detachable axle (4,5).

13. Vehicle according to any one of the previous claims,
**characterised in that**,
in the coupled state of at least one further detachable axle (4, 5) in an axle module (19), both parts of a dog clutch (14) connecting a drive shaft are connected together by means of a coupling device making it possible to transfer a torque to the coupled axle (4, 5), wherein, in order to prevent a dog clutch of a further detachable axle (4, 5) from rotating during the connection process, a separating clutch (18) is provided between the dog clutch (14) and the lockable transverse differential (11) as an axle differential (11) wherein, after the connection, the separating clutch (18) is closed and the intermediate differential lock is opened.

## Revendications

1. Véhicule comprenant
- une boîte de vitesses (6)
- un différentiel longitudinal (8),
- un module tubulaire central (9) pour raccorder un essieu monté à demeure (2, 3) à une chaîne cinématique (15) de la boîte de vitesses (6), dans lequel l'essieu monté à demeure (2, 3) est monté sur le module tubulaire central (9) et le différentiel longitudinal (8) transmet les couples d'entraînement fournis par la boîte de vitesses (6) par l'intermédiaire d'un arbre d'entraînement dans le module tubulaire central (9) à l'essieu monté à demeure (2, 3), et dans lequel dans la chaîne cinématique (15), le différentiel longitudinal (8) et un différentiel d'essieu (11) ainsi que l'essieu monté à demeure (2, 3) sont disposés successivement, **caractérisé en ce que** au moins un autre essieu pouvant être accouplé (4, 5) avec un différentiel inter-ponts (12), qui est disposé en face de l'essieu monté à demeure (2, 3), peut être entraîné par l'intermédiaire d'un arbre d'entraînement (17) guidé à travers le différentiel d'essieu (11) de l'essieu monté à demeure (2, 3) par l'intermédiaire d'un dispositif de couplage (14), dans lequel un module tubulaire central (9) avec un différentiel transversal blocable intégré (11) identique au différentiel d'essieu (11) est monté sur la boîte de vitesses (6) tant à l'avant qu'à l'arrière du véhicule, dans lequel un essieu avant, monté à demeure (2) ou un essieu arrière, monté à demeure (3) sont montés sur le module tubulaire central (9).

2. Véhicule selon la revendication 1, **caractérisé en ce qu'** un carter de boîte de vitesses de la boîte de vitesses (6), les modules tubulaires centraux (9) et les pièces médianes des essieux montés à demeure (2, 3) sont conçus comme des éléments porteurs.

3. Véhicule selon la revendication 1 ou 2,
**caractérisé en ce que**,
le différentiel longitudinal (8) pour distribuer un couple d'entraînement à d'autres essieux (2, 3, 4, 5) est intégré dans la boîte de vitesses (6).

4. Véhicule selon une des revendications 1 à 3,
**caractérisé en ce que**,
le différentiel longitudinal (8) présente un blocage de différentiel (10).

5. Véhicule selon une des revendications 1 à 4,
**caractérisé en ce que**,
dans le module tubulaire central (9) un différentiel transversal blocable (11) est intégré en tant que différentiel d'essieu (11).

6. Véhicule selon une des revendications 1 à 5,
**caractérisé en ce que**,
entre l'essieu (2, 3, 4, 5) et le différentiel longitudinal (8), un différentiel inter-ponts (12) est intégré dans une chaîne cinématique (15), pour distribuer le couple d'entraînement à d'autres essieux pouvant être accouplés, dans lequel le différentiel inter-ponts peut être bloqué, afin de transférer le couple d'entraînement à un essieu monté à demeure exclusivement dans l'état non couplé à un essieu.

7. Véhicule selon une des revendications 1 à 6,
**caractérisé en ce que**,
au moins un autre essieu (2, 3, 4, 5) avec un différentiel d'essieu est fixé au premier essieu (2, 3, 4, 5) via un module tubulaire central (9) ou relié de manière réversible via un dispositif d'accouplement au premier essieu (2, 3, 4, 5), dans lequel les essieux (2, 3, 4, 5) forment ensuite deux essieux avant ou deux, trois ou plus essieux arrière (2, 3, 4, 5) d'un véhicule (1) .

8. Véhicule selon une des revendications 1 à 7,
**caractérisé en ce que**,
le module tubulaire central (9) est un premier module tubulaire central (9) et un deuxième module tubulaire central (9) est disposé sur la boîte de vitesses (6) sur un côté opposé au premier module tubulaire central dans la direction longitudinale, de préférence avec un différentiel transversal blocable intégré (11), dans lequel un deuxième essieu (2, 3, 4, 5) est pourvu d'un différentiel d'essieu, dans lequel ce deuxième essieu (2, 3, 4, 5) est monté sur le deuxième module tubulaire central (9) et le différentiel longitudinal (8) transfère aux essieux (2, 3, 4, 5) les couples d'entraînement fournis par la boîte de vitesses (6).

9. Véhicule selon une des revendications 1 à 8,
**caractérisé en ce que**,
un autre essieu (2, 3, 4, 5) avec différentiel d'essieu est fixé au deuxième essieu par l'intermédiaire d'un module tubulaire central (9) ou est relié de manière réversible au deuxième essieu par un dispositif d'accouplement, dans lequel les essieux (2, 3, 4, 5) forment ensuite deux essieux avant ou deux essieux arrière (2, 3, 4, 5) d'un véhicule (1).

10. Véhicule selon une des revendications 1 à 9,
**caractérisé en ce que**,
les essieux avant et/ou arrière (2, 3, 4, 5) sont conçus pour être moteurs et/ou orientables.

11. Véhicule selon une des revendications précédentes,
**caractérisé en ce que**,
le véhicule comporte un premier dispositif d'attelage, qui est conçu comme un réceptacle pour un dispositif d'attelage conçu de manière à correspondre à un module d'essieu (19) ou un accessoire.

12. Véhicule selon une des revendications précédentes,
**caractérisé en ce que**,
un module d'essieu pouvant être accouplé (19) comprend un dispositif d'attelage ou un insert d'attelage pour le raccordement correspondant au dispositif d'attelage du véhicule (1), dans lequel le deuxième côté d'un accouplement à crabots pour le dispositif de couplage (14) est intégré dans le module d'essieu pouvant être accouplé, ainsi qu'un module tubulaire central avec un accouplement de séparation (18) et un différentiel transversal blocable (11) sous la forme d'un différentiel d'essieu (11) et un d'au moins un autre essieu pouvant être accouplé (4, 5).

13. Véhicule selon une des revendications précédentes,
**caractérisé en ce que**,
à l'état accouplé d'un d'au moins un autre essieu pouvant être accouplé (4, 5) dans un module d'essieu (19), les deux parties d'un accouplement à crabots (14) raccordant un arbre d'entraînement sont reliées l'une à l'autre au moyen de un dispositif d'accouplement, de sorte qu'une transmission de couple de rotation à l'essieu accouplé (4, 5) soit rendue possible, dans le but d'empêcher la rotation d'un élément de crabot d'un autre essieu pouvant être accouplé (4,5) pendant le processus de raccordement, entre l'accouplement à crabots (14) et le différentiel transversal blocable (11) sous la forme d' un différentiel d'essieu (11) un accouplement de séparation (18) est prévu, dans lequel après le raccordement l'accouplement de séparation (18) est fermé et le blocage du différentiel inter-ponts est ouvert.
